# EUROPEAN PATENT APPLICATION

(11) **EP 2 334 090 A2**
(43) Date of publication of application: **15.06.2011**
(21) Application number: 10187211.7
(22) Date of filing: 12.10.2010
(51) Int. Cl.: H04N 13/00

(54) **Shutter glasses for stereoscopic image display system**

(30) Priority: 09.12.2009 KR 20090122085
(71) Applicant: SAMSUNG ELECTRONICS CO., LTD., Suwon-si Gyeonggi-do 442-742 (KR)
(72) Inventor: PARK, Jung-jin, Seongnam-si Gyeonggi-do (KR); HA, Tae-hyeun, Suwon-si Gyeonggi-do (KR); KWAK, Jong-kil, Suwon-shi Gyeonggi-do (KR); CHOI, Nak-won, Bupyeong-gu Incheon (KR)
(74) Representative: Clark, David James

(57) **Abstract**

Provided are shutter glasses for stereoscopic image and a display system having the same. The display system includes: a display apparatus including a display part which displays a stereoscopic image including a left eye image and a right eye image and a signal transceiving part which transmits a synchronization signal and receives a control signal; and shutter glasses including: a signal receiving part which receives the synchronization signal; a left eye shutter and a right eye shutter; a first attenuating part which attenuates an intensity of light incident onto the signal receiving part below a threshold of signal sensitivity of the signal receiving part; and a control part which controls the opening and closing of the left eye shutter and the right eye shutter based on the synchronization signal received from the signal receiving part.

## Description

### BACKGROUND

### 1. Field

Apparatuses and systems consistent with the exemplary embodiments relate to shutter glasses for stereoscopic image and a display system having the same, and more particularly, to shutter glasses for viewing a stereoscopic image, which are configured to prevent a light reception rate from being lowered due to external light, and a display system having the same.

### 2. Description of the Related Art

With advances in technologies, display apparatuses having a structure to provide stereoscopic (or three-dimensional) images are developing and spreading. Unlike a two-dimensional (2D) image signal, a stereoscopic image signal is required to be separated into two contents (i.e., images) which are to be displayed for respective left and right eyes of a user.

For the purpose of providing an experience of a stereoscopic image for the user using the images displayed for the respective left and right eyes of the user, shutter glasses of a shutter type are being developed to allow the user to view an image for the left eye and an image for the right eye alternately. A left eye shutter and a right eye shutter of the shutter glasses are controlled to be opened and closed based on a synchronization signal received from a display apparatus.

In this regard, when an indoor illuminator, such as a fluorescent lamp, an incandescent lamp or the like, illuminates a space where the user is viewing the stereoscopic image, the external light from such an indoor illuminator may be received as noise by the shutter glasses if it is incident into a signal receiving part of the shutter glasses. This may raise a possibility of malfunction with respect to the opening and closing of the shutters of the shutter glasses. In addition, a signal transceiving part of the display apparatus may malfunction due to the external light with respect to receiving a signal from a radio control terminal or the like for display.

### SUMMARY

Accordingly, one or more exemplary embodiments provide shutter glasses which are configured to eliminate noise by attenuating an intensity of external light incident onto a signal receiving part of the shutter glasses and a signal transceiving part of a display apparatus, and a display system employing the shutter glasses.

The foregoing and/or other exemplary aspects may be achieved by providing shutter glasses for viewing a stereoscopic image, including: a glasses body; a left eye shutter which blocks a right eye image and transmits a left eye image; a right eye shutter which blocks the left eye image and transmits the right eye image; a signal receiving part which is provided in the glasses body and receives a synchronization signal from a display for opening and closing the left eye shutter and the right eye shutter ; an attenuating part which is provided in the glasses body and attenuates an intensity of external light incident onto the signal receiving part below a threshold of signal sensitivity of the signal receiving part; and a control part which controls the opening and closing of the left eye shutter and the right eye shutter based on the synchronization signal received from the signal receiving part.

The attenuating part may include a polarizing plate which transmits light having a first polarization of the light incident onto the signal receiving part and blocks light having a second polarization different from the first polarization.

The signal receiving part may include an infrared receiver which receives an infrared ray.

The foregoing and/or other aspects may be achieved by providing a display system including: a display apparatus including a display part which displays a stereoscopic image including a left eye image and a right eye image and a signal transceiving part which transmits a synchronization signal and receives a control signal; and shutter glasses including: a signal receiving part which receives the synchronization signal from the signal transceiving part; a left eye shutter and a right eye shutter which are opened and closed according to the left eye image and the right eye image in synchronization with the synchronization signal received from the signal receiving part; a first attenuating part which attenuates an intensity of external light incident onto the signal receiving part below a threshold of signal sensitivity of the signal receiving part; and a control part which controls the opening and closing of the left eye shutter and the right eye shutter based on the synchronization signal received from the signal receiving part.

The first attenuating part may include a first polarizing plate which transmits light having a first polarization of the light incident onto the signal receiving part and blocks light having a second polarization different from the first polarization.

The foregoing and/or other aspects may be achieved by providing shutter glasses for stereoscopic image including a left eye shutter and a right eye shutter, including: a polarizing plate having a predetermined polarization direction; a signal receiving part which receives a control signal from a display apparatus through the polarizing plate; and a control part which controls opening and closing of the left eye shutter and the right eye shutter based on the control signal received from the signal receiving part.

The polarizing plate may have an effect of polarization which is higher for incident light in a visible range than for incident light in an infrared range. The polarizing plate may be of a film type or a plate type.

The control signal may be a synchronization signal to control opening and closing of the left eye shutter and the right eye shutter.

The display system may further include a radio control terminal including a terminal body and a signal transmitting part which is provided in the terminal body and transmits the control signal to the display apparatus.

The display apparatus may further include a second attenuating part which attenuates an intensity of external light incident onto the signal transceiving part below a threshold of signal sensitivity of the signal transceiving part.

The second attenuating part may include a second polarizing plate which transmits light having a third polarization of the light incident onto the signal transceiving part and blocks light having a fourth polarization different form the third polarization. The first polarization and the third polarization may be the same, and the second polarization and the fourth polarization may be the same.

Shutter glasses according to exemplary embodiments and a display system employing the same can eliminate noise due to the external light by means of the first attenuating part and the second attenuating part, thereby preventing malfunction of the shutter glasses and the display apparatus.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a schematic perspective view showing a display system according to an exemplary embodiment;
FIG. 2 is a control block diagram of the display system of FIG. 1;
FIG. 3 is a schematic view for explaining an attenuation effect of light incident into a signal receiving part, the effect being generated by a first attenuating part of shutter glasses, according to an exemplary embodiment;
FIGs. 4A and 4B are views showing intensities of light incident onto the signal receiving part in the absence and presence of a first polarizing plate, respectively;
FIGs. 5A and 5B are views showing signals output from the signal receiving part in the absence and presence of the first polarizing plate, respectively; and
FIG. 6 is a schematic view for explaining an attenuation effect of light incident into a signal transceiving part, the effect being generated by the first attenuating part of the display system, according to an exemplary embodiment.

### DETAILED DESCRIPTION

Below, exemplary embodiments will be described in detail with reference to accompanying drawings so as to be easily realized by a person having ordinary knowledge in the art.

Exemplary embodiments may be embodied in various forms without being limited to the exemplary embodiments set forth herein. Descriptions of well-known parts are omitted for clarity, and like reference numerals refer to like elements throughout.

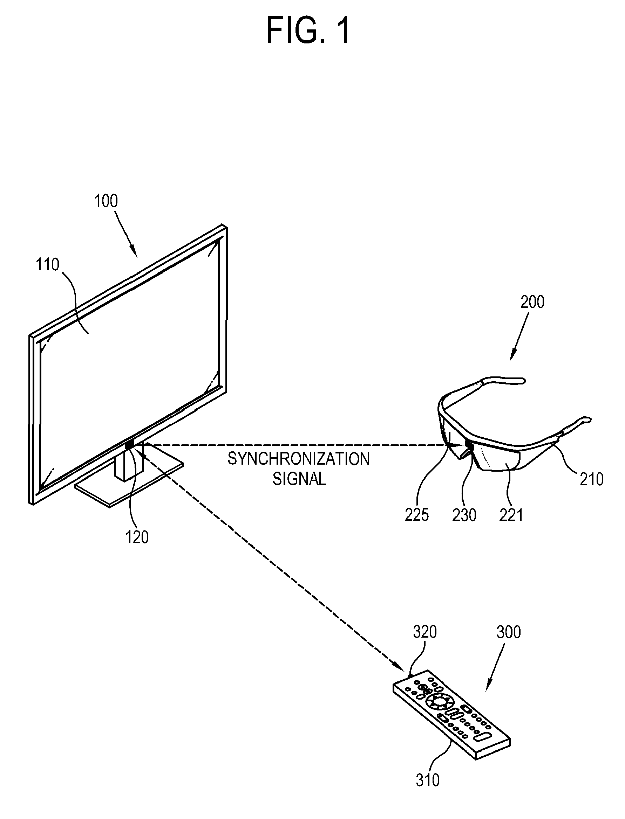

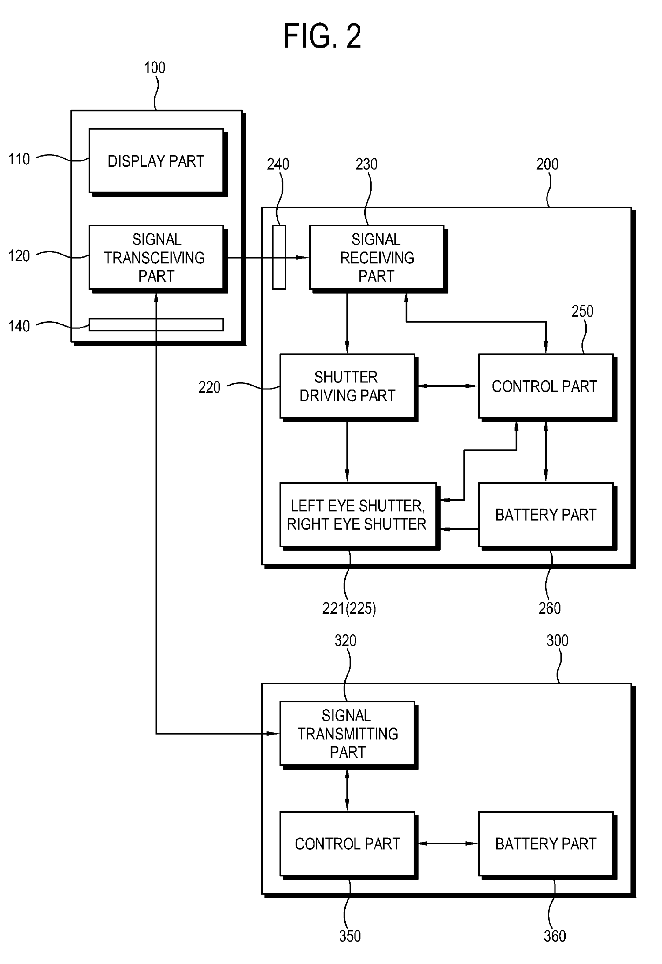

FIG. 1 is a schematic perspective view showing a display system according to an exemplary embodiment, and FIG. 2 is a control block diagram of the display system of FIG. 1.

Referring to these figures, a display system according to an exemplary embodiment includes a display apparatus 100 and shutter glasses 200. The display apparatus 100 displays a stereoscopic image composed of a left eye image and a right eye image. The shutter glasses 200 include a glasses body 210 and left and right eye shutters 221 and 225 which are disposed in the glasses body 210 and are opened and closed in synchronization with the left eye image and the right eye image displayed on the display apparatus 100. The left eye shutter 221 is closed when the right eye image is to be displayed on the display apparatus 100 and is opened when the left eye image is displayed on the display apparatus 100. That is, the left eye shutter 221 shields the right eye image while transmitting the left eye image. The right eye shutter 225 works in reverse of the left eye shutter 221. That is, the left eye shutter 225 shields the left eye image while transmitting the right eye image.

The display apparatus 100 displays the left eye image and the right eye image with them separated for each frame, and a user who wears the shutter glasses 200 may view the images, which are separated through the opening and closing of the left eye shutter 221 and the right eye shutter 225, as the stereoscopic image. The display apparatus 100 includes a display part 110 which displays an image, and a signal transceiving part 120 which transmits a synchronization signal to the shutter glasses 200 and receives a control signal from a radio control terminal 300. The display apparatus 100 may be implemented by a portable terminal such as a television, a monitor, a mobile phone and the like, which are capable of receiving a three-dimensional (3D) image signal from an image source and displaying it.

In addition, the display apparatus 100 may further include a signal receiving part (not shown) which receives an image signal from an image source, an image signal processing part (not shown) which processes the received image signal.

The display part 110 displays an image based on the processed image signal. The display unit 110 may include a liquid crystal panel including a liquid crystal layer, an organic light emitting panel including a light emitting layer made of organic material, a plasma display panel, etc., and a panel driving part which drives the above panels.

The signal transceiving part 120 generates a synchronization signal and transmits it to the shutter glasses 200 so that the left eye shutter 221 and the right eye shutter 225 of the shutter glasses 200 can be opened and closed in synchronization with an image displayed on the display part 110. The synchronization signal may be transmitted for each of the pair of left eye image and right eye image, that is, every two frames, or may be transmitted every frame. The signal transmitting part 120 may communicate with a signal receiving part 230 of the shutter glasses 200 through any of infrared communication, wireless communication such as Bluetooth, radio frequency (RF) communication or other communication as would be understood by one of skill in the art.

The shutter glasses 200 includes the signal receiving part 230, a first attenuating part 240 and a control part 250 which controls these parts 230 and 240, in addition to the glasses body 210, the left eye shutter 221 and the right eye shutter 225. In addition, the shutter glasses 200 may further include a shutter driving part 220 which drives the left eye shutter 221 and the right eye shutter 225, and a battery part 260.

The signal receiving part 230 receives the synchronization signal from the display apparatus 100 and outputs it to the shutter driving part 220. The signal receiving part 230 may include an infrared receiver which receives an infrared ray. The shutter driving part 220 performs an auto gain control for the synchronization signal input thereto to drive the left eye shutter 221 and the right eye shutter 225. The shutter driving part 220 may divide a frequency of the synchronization signal and delay the frequency-divided synchronization signal or alter its phase. The left eye shutter 221 and the right eye shutter 225 may be configured by liquid crystal shutter glasses and are opened and closed with driving of the shutter driving part 220.

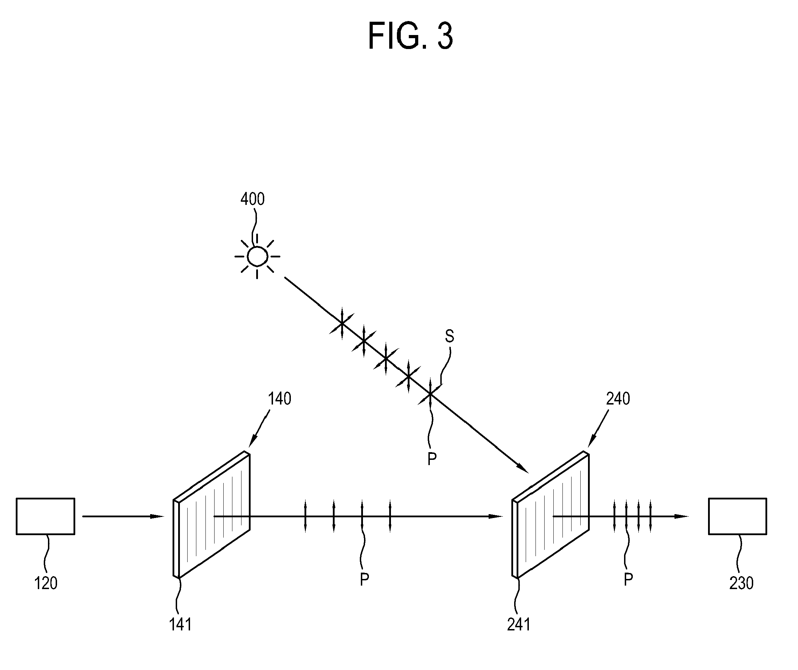

The first attenuating part 240 is disposed in front of the signal receiving part 230 within the glasses body 210 and attenuates intensity of light incident onto the signal receiving part 230. That is, the first attenuating part 240 may eliminate noise due to external light by attenuating not only a light intensity of the synchronization signal input from the signal transceiving part 120 of the display apparatus but also an intensity of the external light including light of an indoor illuminator (400 in FIG. 3) such as a fluorescent lamp, an incandescent lamp, an LED lamp or the like in a place where the display system is installed. Accordingly, the first attenuating part 240 may reduce the intensity of the external light below a threshold of signal sensitivity of the signal receiving part 230.

As shown in FIG. 3, the first attenuating part 240 may include a first polarizing plate 241 which transmits some polarized light of the light incident onto the signal receiving part 230 and blocks other polarized light. For example, the first polarizing plate 241 may be disposed to transmit P-polarized light. In this case, S-polarized light input from the signal transceiving part 120 to the first polarizing plate 241 (non-polarized light in the absence of a second polarizing plate 141) and S-polarized light of non-polarized light (combination of S-polarized light and P-polarized light) input from the indoor illuminator 400 to the first polarizing plate 241 are blocked, while the P-polarized light from the signal transceiving part and P-polarized light of the non-polarized light input from the indoor illuminator 400 is transmitted to be incident onto the signal receiving part 230. When the first polarizing plate 241 is provided in this manner, it has theoretically an effect of light intensity reduction of about 50% as compared to the intensity of incident light. Here, the first polarizing plate 241 may has property of polarization effect higher in a visible range than an infrared range. In addition, the polarizing plate may be configured as a film type or a plate type.

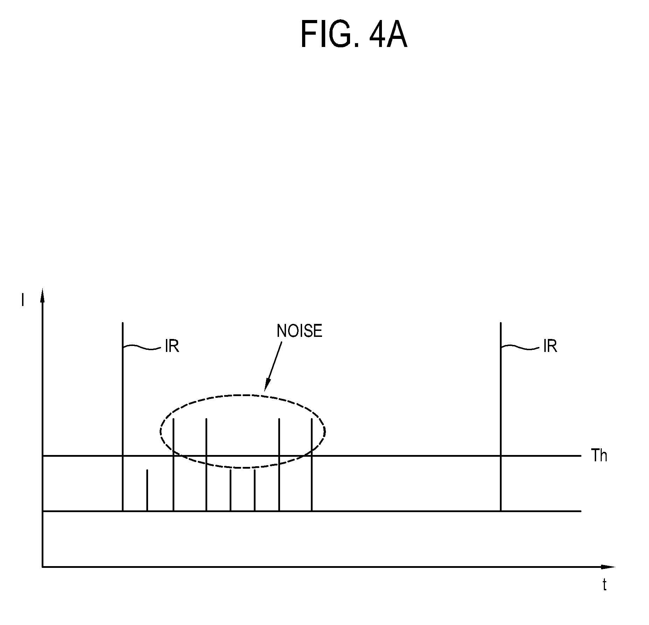

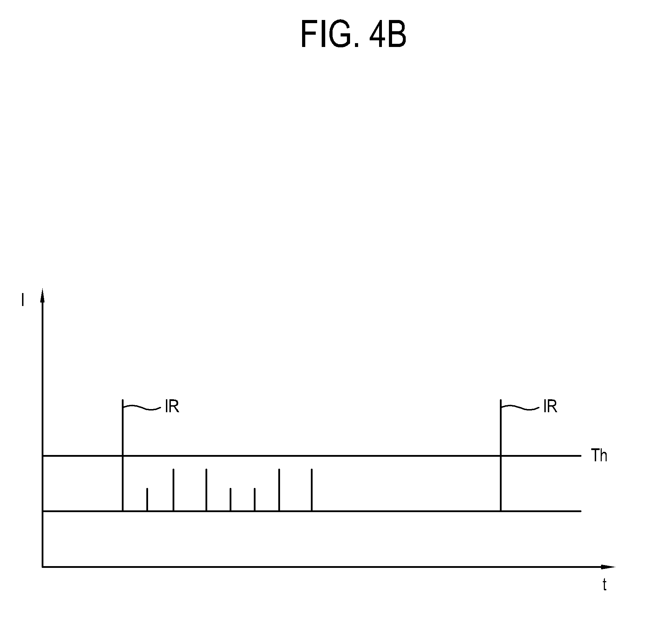

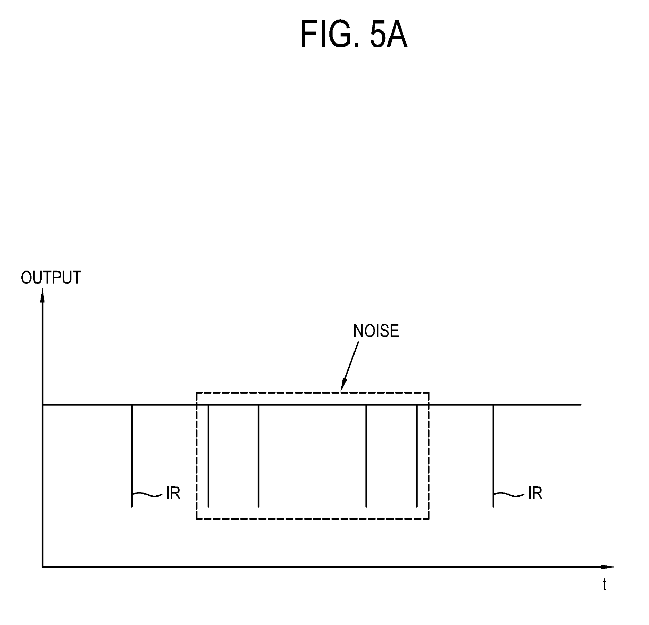

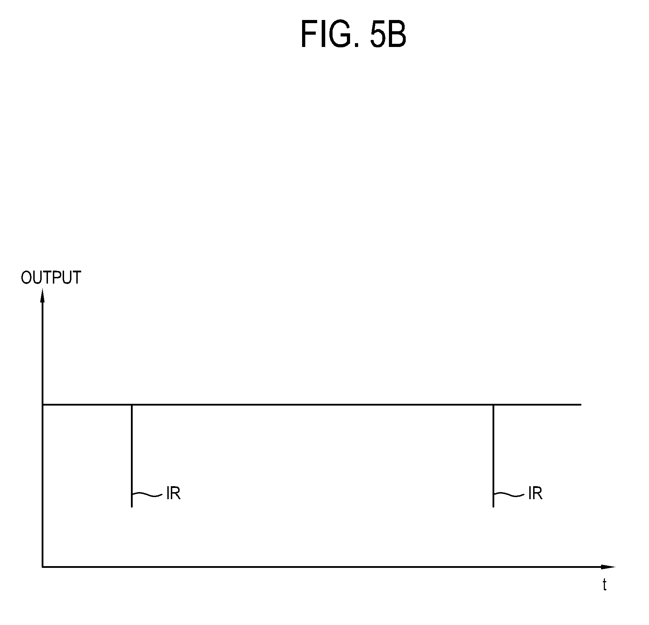

FIGs. 4A and 4B show intensities of light incident onto the signal receiving part 230 in the absence and presence of the first polarizing plate 241, respectively. FIGs. 5A and 5B show signals output from the signal receiving part 230 in the absence and presence of the first polarizing plate 241, respectively.

Referring to FIG. 4A, it can be seen that both of the light (IR) input from the signal transceiving part (120 in FIG. 3) and some of the external light from the indoor illuminator (400 in FIG. 3) have intensity (I) which is higher than a threshold (Th) of signal sensitivity which can be responded by the signal receiving part 230. In this case, the external light from the indoor illuminator 400 may act as noise as shown in FIG. 5A as it has an intensity higher than the threshold (Th).

Referring to FIG. 4B, since the intensity of the light incident onto the signal receiving part 230 is attenuated by about 50% under the same conditions as FIG. 4A, only the light (IR) input from the signal transceiving part (120 in FIG. 3) has intensity (I) which is higher than the threshold (Th) of signal sensitivity which can be responded by the signal receiving part 230 and the external light from the indoor illuminator (400 in FIG. 3) have intensity which is lower than the threshold (Th), thereby eliminating noise as shown in FIG. 5B.

The battery part 260 supplies power for components such as the left eye shutter 221, the right eye shutter 225, the signal receiving part 230, the shutter driving part 220 and so on. The battery part 260 may include a rechargeable secondary cell. The control part 250 controls the opening and closing of the left eye shutter 221 and the right eye shutter 225 based on the synchronization signal received from the signal receiving part 230.

The display system according to the exemplary embodiment of the present invention may further include the radio control terminal 300. Referring to FIGs. 1 and 2, the radio control terminal 300 includes a terminal body 310 and a signal transmitting part 320 which is provided in the terminal body 310 and transmits a control signal to the signal transceiving part 120 of the display apparatus 100. In addition, the radio control terminal 300 may include a control part 350 which controls the signal transmitting part 320 and a battery part 360 which supplies power to the radio control terminal 300. In this embodiment, the signal transmitting part 320 may include an infrared transmitter which transmits an infrared ray for infrared communication with the signal transceiving part 120.

In this case, the display apparatus 100 may further include a second attenuating part 140. The second attenuating part 140 is disposed in front of the signal transceiving part 120 of the display apparatus 100 and attenuates intensity of light incident onto the signal transceiving part 120. That is, the second attenuating part 140 may eliminate noise due to external light by attenuating not only light intensity of the control signal input from the signal transmitting part 320 of the radio control terminal 300 but also intensity of the external light including light of the indoor illuminator 400 in a place where the display system is installed. Accordingly, like the first attenuating part 240, the second attenuating part 140 may reduce the intensity of the external light below a threshold of signal sensitivity of the signal transceiving part 120.

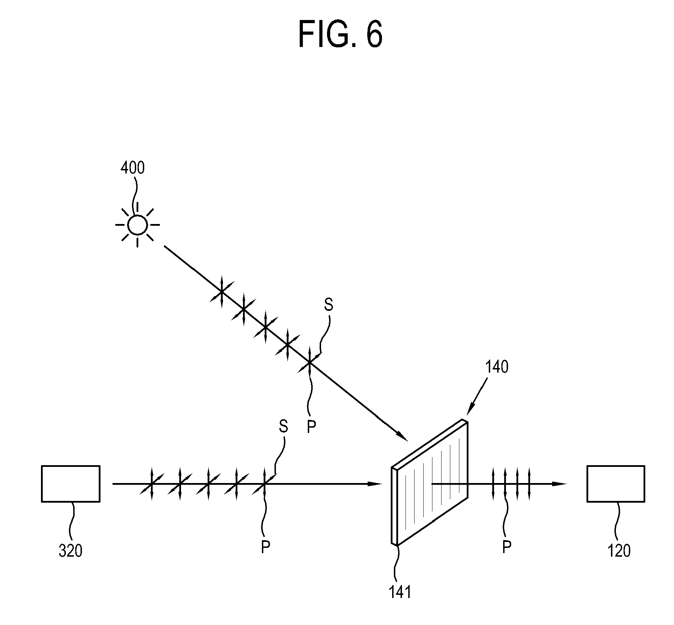

As shown in FIG. 6, the second attenuating part 140 may include a second polarizing plate 141 which transmits some polarized light of the light incident onto the signal transceiving part 120 and blocks other polarized light. For example, the second polarizing plate 141 is disposed to transmit P-polarized light. In this case, S-polarized light of non-polarized light (combination of S-polarized light and P-polarized light) input from the signal transmitting part 320 and the indoor illuminator 400 to the second polarizing plate 141 are blocked, while the P-polarized light of the non-polarized light is transmitted to be incident onto the signal transceiving part 120. When the second polarizing plate 141 is provided in this manner, it has theoretically an effect of light intensity reduction of about 50% as compared to the intensity of incident light. Here, the first and second polarizing plates 241 and 141 may have the same polarization direction as shown in FIG. 3. The inclusion of the first and second polarizing plates 241 and 141 allows the P-polarized light of the light input from the signal transceiving part 120 to be incident onto the signal receiving part 230 without an additional loss. Accordingly, noise due to the external light can be eliminated as described above with reference to FIGs. 4A to 5B.

Shutter glasses according to exemplary embodiments as configured above and the display system employing the same can eliminate noise due to the external light by means of the first attenuating part and the second attenuating part, thereby preventing malfunction of the shutter glasses and the display apparatus.

Although a few exemplary embodiments have been shown and described, it will be appreciated by those skilled in the art that changes may be made in these exemplary embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. Shutter glasses for viewing a stereoscopic image, the shutter glasses comprising:
a glasses body;
a left eye shutter which blocks a right eye image and transmits a left eye image;
a right eye shutter which blocks the left eye image and transmits the right eye image;
a signal receiving part which is provided in the glasses body and receives a control signal from a display for opening and closing the left eye shutter and the right eye shutter;
an attenuating part which is provided in the glasses body and attenuates intensity of light incident onto the signal receiving part below a threshold of signal sensitivity of the signal receiving part; and
a control part which controls the opening and closing of the left eye shutter and the right eye shutter based on the control signal received from the signal receiving part.

2. The shutter glasses according to claim 1, wherein the signal receiving part comprises an infrared receiver.

3. The shutter glasses according to claim 1 or 2, wherein the attenuating part comprises a polarizing plate which transmits light having a first polarization and blocks light having a second polarization different from the first polarization.

4. The shutter glasses for stereoscopic image according to claim 3, wherein the polarizing plate has an effect of polarization which is higher for incident light in a visible range than for incident light in an infrared range.

5. The shutter glasses for stereoscopic image according to claim 3 or 4, wherein the polarizing plate is one of a film type and a plate type.

6. The shutter glasses for stereoscopic image as claimed in any one of claims 1 through 5, wherein the control signal is a synchronization signal to control the opening and closing of the left eye shutter and the right eye shutter.

7. A display system comprising:
a display apparatus comprising:
a display part which displays a stereoscopic image comprising a left eye image and a right eye image, and
a signal transceiving part which transmits a synchronization signal and receives a control signal; and
shutter glasses comprising:
a signal receiving part which receives the synchronization signal from the signal transceiving part;
a left eye shutter which blocks a right-eye image and transmits a left-eye image, and a right eye shutter which blocks the left-eye image and transmits the right-eye image;
a first attenuating part which attenuates an intensity of light incident onto the signal receiving part below a threshold of signal sensitivity of the signal receiving part; and
a control part which controls the opening and closing of the left eye shutter and the right eye shutter based on the synchronization signal received from the signal receiving part.

8. The display system according to claim 7, wherein the first attenuating part comprises a first polarizing plate which transmits light having a first polarization and blocks light having a second polarization different from the first polarization.

9. The display system according to claim 8, wherein the first polarizing plate has an effect of polarization which is higher for incident light in a visible range than for incident light in an infrared range.

10. The display system as claimed in any one of claims 7 through 9, further comprising a radio control terminal comprising a terminal body and a signal transmitting part which is provided in the terminal body and transmits the control signal to the display apparatus.

11. The display system according to claim 10, wherein the display apparatus further comprises a second attenuating part which attenuates an intensity of light incident onto the signal transceiving part below a threshold of signal sensitivity of the signal transceiving part.

12. The display system according to claim 11, wherein the second attenuating part comprises a second polarizing plate which transmits light having a third polarization and blocks light having a fourth polarization different from the third polarization.

13. The display system according to claim 12, wherein the second polarizing plate has an effect of polarization which is higher for incident light in a visible range than for incident light in an infrared range.

14. The display system according to claim 12 or 13, wherein the first polarization and the third polarization are the same and wherein the second polarization and the fourth polarization are the same.
